Europäisches Patentamt

European Patent Office

Office européen des brevets

(11) Publication number: **0 195 225**
**B1**

# (12) EUROPEAN PATENT SPECIFICATION

(45) Date of publication of patent specification: **30.08.89**

(51) Int. Cl.⁴: **B 21 C 37/12**

(21) Application number: **86101570.9**

(22) Date of filing: **07.02.86**

(54) **Process for forming flexible tubular bodies and device for carrying out said process.**

(30) Priority: **15.02.85 IT 1953685**

(43) Date of publication of application:
**24.09.86 Bulletin 86/39**

(45) Publication of the grant of the patent:
**30.08.89 Bulletin 89/35**

(84) Designated Contracting States:
**AT BE CH DE FR GB LI LU NL SE**

(56) References cited:
**DE-C- 311 233**

(73) Proprietor: **SOCIETA CAVI PIRELLI S.p.A.**
**Piazzale Cadorna, 5**
**I-20123 Milan (IT)**

(72) Inventor: **Dotti, Enrico**
**Via Archimede 22**
**Milan (IT)**
Inventor: **Sala, Angelo**
**Via Leopardi 3**
**Merate (Como) (IT)**

(74) Representative: **Mariani, Giorgio, Dr. et al**
**INDUSTRIE PIRELLI S.p.A. Direzione Brevetti**
**· Piazzale Cadorna, 5**
**I-20123 Milano (IT)**

Courier Press, Leamington Spa, England.

# Description

The present invention refers to a process for forming flexible tubular bodies, constituted by a bundle of a plurality of metallic shaped members permanently deformed according to a helical configuration and placed side by side, apt to form reinforcements for pipes, in particular submarine pipes, cable armours, for instance cable armours for optical fiber cables and the like.

The present invention refers also to a device for carrying into effect the above mentioned process.

Processes and devices for realizing tubular bodies of the type summarily described above are known.

A first known process provides for permanently deforming in continuous according to a helical configuration a plurality of metallic shaped members laying them up together so as to originate a tubular body.

According to this first known process, the permanent helical deformation of each shaped member takes place through two successive permanent deformations.

In particular a first permanent bending deformation is carried out in the wider median plane of the shaped member, usually called "saber-like deformation" and is followed by a second permanent torsional deformation of the shaped member.

The drawback of the above described known process is a consequence of the fact that a length variation in the edges of the shaped member takes place during the saber-like deformation, which is the first permanent bending deformation. During the second permanent torsional deformation, applied to the shaped member which gives rise to the formation of the helicoid, a deformation in opposite direction is applied to said shaped member edges to make these latter of equal length.

During the second permanent torsional deformation, a modification is consequently caused in opposite direction to the permanent bending deformation to which the shaped member had previously been subjected.

It followed that the material of the shaped members is subjected to considerable mechanical stresses with the risk of reducing the resistance characteristics and of further obtaining shaped members not perfectly shaped according to helicoids at the lateral edges so that when the shaped members will be laid-up together for forming a tubular body they result under stress condition.

A second known process provides for permanently deforming through a torsion a plurality of shaped members around their longitudinal axes and subsequently for elastically helicoidally winding them on a mandrel, placing them one near the other so as to realize a tubular body without giving further permanent deformations to them.

The tubular bodies obtained by means of this second known process have an unstable configuration since all the component shaped members are permanently under stress conditions.

The aim of the present invention is that of overcoming the drawbacks of the known processes reducing at the minimum the mechanical stresses given to the material forming the shaped members and of obtaining tubular bodies devoid of stresses and consequently devoid of unstable configurations, with an accurate helical configuration at any point of the component shaped members.

The object of the present invention is a process for forming a flexible tubular body constituted by a plurality of metallic shaped members placed side by side and permanently deformed according to helicoids, said permanent helicoidal deformation of the shaped members being carried out before laying them up together to originate the tubular body, said process being characterized by the fact that the helicoidal conformation of the shaped members comprises the step of permanently deforming through a torsion each shaped member around its own longitudinal axis and the successive step of permanently deforming through a bending each shaped member around the axis of the cross-section of the shaped member parallel to the side that will constitute the inner cylindrical surface of the tubular body.

Another object of the present invention is a device for forming a flexible tubular body constituted by a plurality of metallic shaped members, permanently deformed according to a helicoidal configuration, placed side by side, which comprises:

a plurality of housing bobbins for the shaped members mounted on a rotating cage

a plurality of a pre-shaping dies, one for each shaped member, mounted on a shaft rotating with the cage and downstream of this latter

a fixed laying-up mould coaxial with the rotating shaft and downstream of this latter, said device being characterized by the fact that each pre-shaping die comprises two pairs of rollers supported by a frame with means for changing their mutual distance, the axes of rotation of the rollers being parallel to one another, a mechanism being provided for changing the inclination of the frame both with respect to the axis of rotation of the shaft and with respect to an axis perpendicular to this latter.

The present invention will be better understood by the following detailed description made by way of non limiting example with reference to the figures of the attached sheets of drawing in which:

Figure 1 is a plan schematic view of a device according to the invention;

Figure 2 is an enlarged scale of a particular of the device of Figure 1;

Figures 3A and 3B show particulars of the device of Figure 2;

Figure 4 shows another particular of the device of Figure 2;

Figure 5 shows the configuration of a shaped member downstream of the device that gives a helical permanent configuration to it and in the first portion of the tubular body formed by said shaped members;

Figure 6 is a perspective view of a portion of a particular shaped member.

The process according to the present invention for forming a tubular body obtained by laying-up a plurality of shaped members permanently deformed according to a helical configuration comprises the steps indicated hereinafter.

A plurality of shaped members, in a number corresponding to the one previously established for forming a determined tubular body is firstly permanently deformed according to helicoids and subsequently the shaped members are laid-up together.

The permanent helicoidal deformation of each shaped member takes place through the steps reported hereinafter.

Each shaped member is at first permanently deformed according to a helical configuration through a mere torsion around its own longitudinal axis, that in Figure 6, where there is shown an example of a shaped member portion, is represented by the line 1.

In particular the deformation through a mere torsion of each shaped member is carried out so as to obtain a helix whose pitch is in function of the diameter and of the pitch that the helicoid will have when assembled with the other shaped members to constitute the tubular body.

More specifically the function that links the pitch of the helix obtained in consequence of the deformation through a mere torsion of each shaped member, to the diameter of the tubular body to be formed and to the pitch of the helicoid that the same shaped member possesses in said tubular body is the following:

$$P_t = \sqrt{\pi^2 d_t^2 + p_c^2}$$

where:

$P_t$ is the pitch of the helix obtained in consequence of the deformation through a mere torsion

$d_t$ is the average diameter of the tubular body;

$p_c$ is the pitch of the helicoid of the shaped member present in the tubular body formed by the laying-up of said shaped members.

Then a permanent deformation through a mere bending around an axis of the cross-section of the shaped member parallel to the side that will constitute the inner surface of the tubular body is given to each shaped member.

In Figure 6 the path of the just cited axis is represented by the line 2 passing through the longitudinal axis 1 of the shaped member.

Each shaped member after being submitted to the two previously reported steps has a helical configuration and at this stage all the shaped members can be laid up for forming the tubular body.

According to the process of the present invention the characteristic of the step of laying up together the single shaped members already permanently deformed according to helicoids is of conveying them at the laying up point, moving them in the direction of the arrow x, imposing, as shown in Figure 5, the axis $a$ of each helicoid to form with the axis $b$ of the bundle of the helicoids, that coincides with the axis of the tubular body, an angle $\alpha$ equal to the angle of inclination $\beta$ that the tangent $t$ to the longitudinal axis of each shaped member forms with the axis $b$ of the tubular body itself.

The process according to the present invention described above is carried out by means of a device making part of the present invention too.

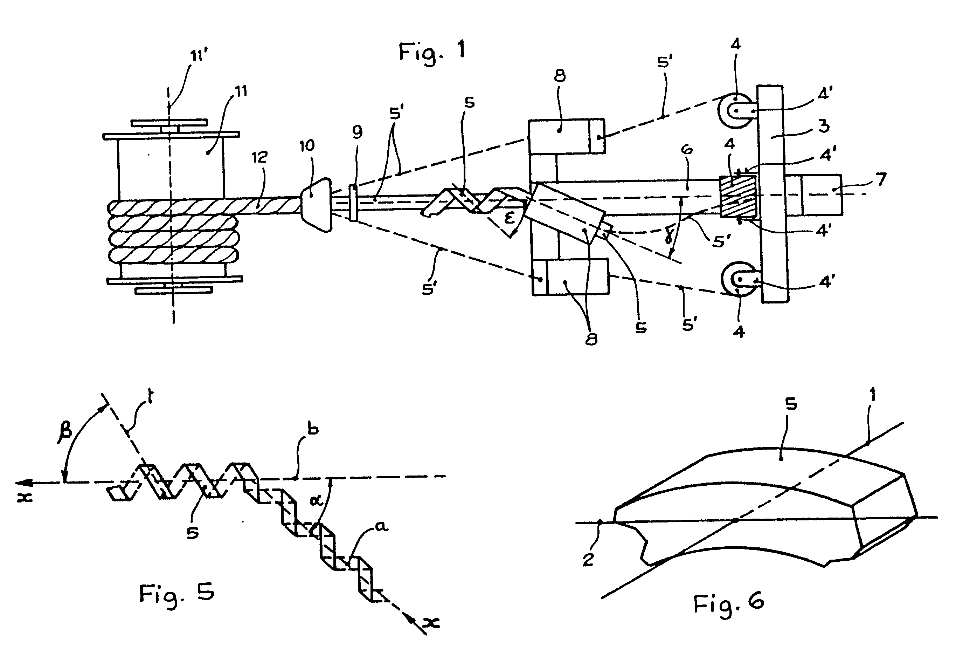

As shown in Figure 1 the device comprises a rotating cage 3 that bears a plurality of bobbins 4; each one of the said bobbins is wrapped by a metallic shaped member which moves following the path represented by the dashed line 5'. The bobbins 4 are free to rotate with respect to the brackets 4' that support their shafts, but the brackets 4' are rigidly secured to the rotating cage 3.

The rotating cage 3 is integral with a shaft 6 mounted on a support 7, connected to a driving device not shown.

A plurality of pre-shaping dies 8, one for each shaped member, described hereinafter, are mounted on the shaft 6.

Downstream of the pre-shaping dies 8 there is a guiding element 9 of the shaped members whose perculiarities will be described hereinafter too.

Downstream of the laying up mould 10 that provides for laying up the shaped members, there is a motor-driven collecting bobbin 11 on which the tubular body 12 resulting from the laying up of the shaped members is wound.

As previously said, each shaped member 5 is provided with a pre-shaping die 8.

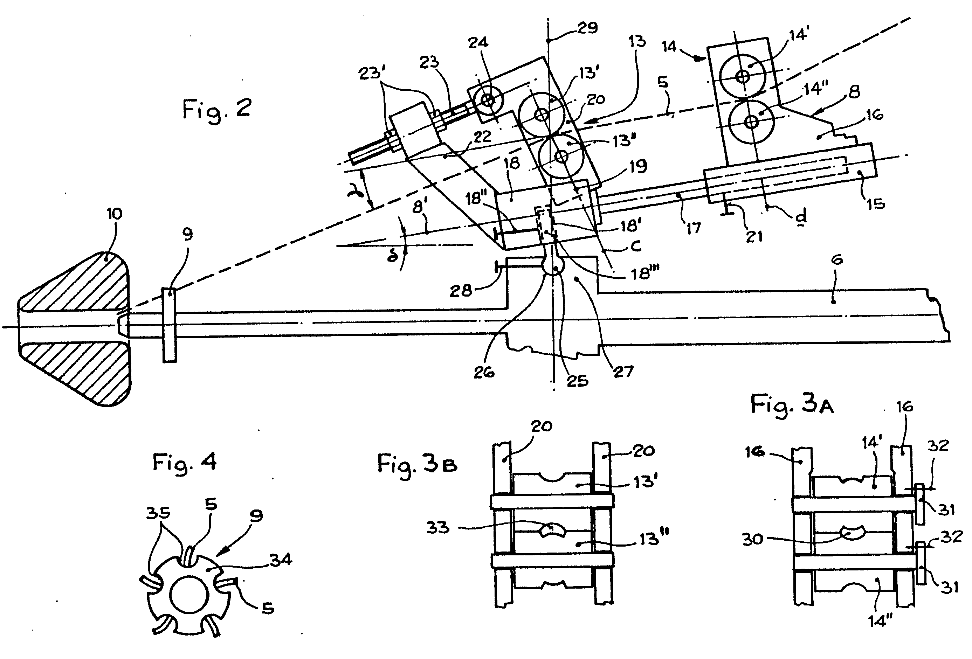

The pre-shaping die 8, schematized in Figure 1 is shown in enlarged scale and in detail in Figure 2 and comprises two pairs of rollers 13 and 14.

The rollers 13', 13'' and 14' and 14'' forming the pairs of rollers have the axes parallel to one another.

Moreover the axes 13' and 13'' of the pair of rollers 13 define a plane $c$ that contains said rollers 13', 13'' axes, while the axes of rotation of the rollers 14' and 14'' of the pair 14 define another plane $d$ that contains said rollers 14', 14'' axes and these two planes $c$ and $d$ are preferably convergent to each other toward the shaft 6.

In particular the pairs of rollers 13 and 14 are mounted in a frame that permits to change the distance between them.

Said frame comprises a box-like body 15 that supports a pair of plates 16 between which there are interposed the rollers 14' and 14'' of the pair 14.

The box-like body 15 receives a rod 17 slidable therein that projects from a box-like body 18 on which at point 19 there are hinged two plates 20 for supporting the rollers 13' and 13'' of the pair of rollers 13.

The possibility given to the box-like body 15 of sliding on the rod 17 and the possibility of blocking its relative sliding through means such as for instance a screw and the like 21 permits to realize a variation of the distance between the box-like bodies 15 and 18 and therefore the distance between the pairs of rollers 13 and 14.

Moreover, the box-like body 18 supports a projecting bracket 22 at whose free end there is a threaded rod 23 whose length can be varied by the action of bushings 23', hinged at point 24 to a protuberance of one of the brackets 20 that support the pair of rollers 13 so as to change the relative inclination between the pairs of rollers 13 and 14.

Moreover the box-like 18 is provided with a dead hole 18' through which a rod 18''' can slide and be blocked through a pin 18'', said rod 18''' having a spherical head 25 inserted in the slot 26 of complementary shape obtained in a cylindrical projection 27 of the shaft 6.

In this way it is possible to change the distance measured on the axis 29 between the surface of mutual contact of the pair of rollers 13 and the axis of the shaft 6.

Said projection 27 is moreover provided with means 28 by which it is possible to block, at the effects of the rotation, the spherical head 25 within the corresponding slot.

The coupling of the spherical head 25 with the slot of complementary shape supported by the cylindrical projection 27 of the shaft 6 permits to direct each pre-shaping die 8 giving the axis 8' of this latter an inclination of an angle δ (Figure 2) with respect to the axis of the shaft 6 and a rotation of an angle γ (Figure 1) with respect to the plane containing the axes 6 and 29.

The importance of these inclinations will be stressed hereinafter.

A particular of the pairs of rollers 13 and 14 of the pre-shaping die 8 is represented in the Figures 3A and 3B.

Figure 3A shows a lateral view of the pair of rollers 14, while the Figure 3B shows a lateral view of the pair of rollers 13.

As shown in Figure 3A the rollers 14' and 14'' have the revolution surface shaped so as to originate, in the zone of mutual contact, a cavity 30 having the shape of the section of the shaped member 5 and possessed by this latter on the collecting bobbins 4.

Moreover the shafts of the rollers 14' and 14'' can be provided with means known per se, to block them so as to impede their rotation and said means are for instance constituted by a head 31 having a hole to receive a pin 32 that blocks the said head 31 to the bracket 16.

Figure 3B shows in lateral view the pair of rollers 13', 13'' that have the revolution surfaces shaped in such a way so as to originate in the zone of mutual contact a cavity 33 whose shape is equal to the shape of the section of the shaped member 5 that it has when mounted in the tubular body 12.

The characteristic of the rollers 13' and 13'' is that of having a smaller radius than the permanent bending curvature radius to be imparted to the shaped member 5 and more specifically smaller than the permanent bending curvature radius that the shaped member 5 has in the tubular body formed by said shaped members to allow to obtain, through the adjustments of the direction of the pre-shaping dies 8 with respect to the axis 6 of the device the desired permanent bending deformation of the shaped member around its axis 2 represented in Figure 6.

According to an alternative embodiment of the device according to the invention the rollers 13' and 13'' are provided with a motor to facilitate the advancing of the shaped members 5.

By comparing the Figures 3A and 3B it is evident that the shape of the cavity originated between the surfaces in mutual contact of the pairs of rollers 13 is rotated of 180° with respect to the shape of the section of the cavity originated in the zone of contact between the pairs of rollers 14. This to impart a permanent torsion to the shaped member. However, this action can be also obtained by maintaining the shapes of the cavities not rotated on conditions that a complete rotation is imparted to the shaped member between the pairs of rollers.

As previously said, downstream of the pre-shaping die and mounted on the shaft 6 there is a guiding element 9 to guide the shaped members in the passage between the outlet of the pre-shaping dies 8 and their inlet into the laying-up head 10 from which the tubular body 12 comes out.

Figure 4 represents the guiding element 9 in front view and in enlarged scale to stress its characteristics.

As shown the guiding element 9 is constituted by a cylindrical body 34 provided at its periphery with a plurality of grooves 35 whose number is equal to the number of the shaped members 5 apt to form the tubular body 12.

In particular the single shaped members 5 are preferably in contact with the guiding element 9 through one of their faces of smaller dimensions.

Now the operation of the device according to the invention will be explained.

Each shaped member 5 coming from the bobbins 4 of the rotating cage 3 passes, following the path 5', into the first pair of rollers 14 of the pre-shaping die and after having been rotated of 180° around its own longitudinal axis crosses the pair of rollers 13 leaving the pre-shaping die.

The distance existing between the pairs of rollers 13 and 14 is fixed in such a way that in the portion existing between them the shaped member 5 suffers a permanent torsional deformation resulting thus shaped according to a helix whose pitch is in function of the diameter and of the pitch that the helicoid will have in the tubular body 12 formed by said shaped members and said function has been previously reported.

As previously mentioned, said distance is determined by changing the distance between the box-like bodies 15 and 18 and blocking the box-like body 15 through the element 21 on the rod 17.

When each shaped member comes out of the pair of rollers 13 suffers a permanent bending deformation around the axis 2 of Figure 6 due to its partial winding on the roller 13'', which is the lower roller of the pair of rollers 13. Said effect is determined by the angle λ (Figure 2) obtained by changing the entity of the angle δ of the pre-shaping die with respect to the axis of the shaft 6. For instance in the case of shaped members of material having a relatively low elastic limit, such as aluminium alloys, the angle λ can have values comprised between 5 and 10 degrees, while for steels having a high elastic limit, the values can also reach 90 degrees.

The angle δ and the diameter of the rollers 13' and 13'' are selected in such a way that the permanent bending deformation of the shaped member 5 originates a radius of curvature equal to the one that the shaped member must have in the tubular body formed by said shaped members and through these indications a technician of the field is able to determine the entire range of values for both the couple of the just cited elements.

Instead the variation of inclination that can be carried out through the threaded rod 23—bushing 23' assembly is needed only to effect a careful adjustment to obtain the above reported effect.

The orientation of the rotation angle γ (Figure 1) of each pre-shaping die around the axis 25 has instead the task of avoiding the distorsion in the shaped member when coming out of the pre-shaping die so as to avoid alterations in the correct helical configuration of the shaped members.

The selection of the angle γ must be effected so that it is equal to the angle ε (see Figure 1), formed by the tangent to the axis of the helicoid under pull, with the axis of the helicoid when coming out of the pre-shaping die.

When each shaped member 5 comes out of the pair of rollers 13 has a permanent helical configuration and is conveyed to the laying-up head 10 by means of a guiding element 9.

Although the rollers of the pairs 13 and 14 can be all free of rotating, it is preferably that the rollers of the pair 14 are blocked at the rotation.

In this situation the helicoids, obtained through the permanent deformation of the shaped member 5, are under tension in the portion comprised between the outlet of the pre-shaping dies 8 and their inlet into the laying-up head 10. It is important for the present invention that said tension does not cause permanent deformations in the shaped members, so that the deformation due to the tension must only be an elastic deformation.

Moreover a distance in radial direction to the shaft 6 will have to be given to the pre-shaping dies by acting on the rod 18''' so that the shaped members can arrive in front of the laying-up head 10 so as to assume the position that they must have in the tubular body, without being subjected to additional stresses.

In the description of the previously reported embodiment of a device according to the invention the assembly comprising the bobbin-holder cage and the pre-shaping die rotates and also the motor-driven collecting bobbin rotates around its axis 11' that is fixed.

This must not be understood in a limiting sense since the present invention includes also the solution according to which the bobbin-holder cage — pre-shaping die assembly is fixed, while the axis of rotation 11' of the motor-driven collecting bobbin is placed into rotation around the axis of the above cited assembly.

From the previously reported description of the process according to the invention, of the device for carrying into effect the process, of the operation of the device and from the consideration hereinafter reported, it will be understood that the aimed purposes are achieved.

The fact of subjecting each shaped member at first to a permanent mere torsional deformation around the longitudinal axis followed by a permanent bending deformation around an axis of the cross-section of the shaped member parallel to the side that will constitute the inner surface of the tubular body permits to obtain a helical configuration through deformations whose effects are summed up without a deformation modifying what obtained with the other deformation.

This means that the stresses to which the material of the shaped member is subjected to reach the helical configuration are the minimum possible stresses.

Moreover the fact of conveying to the laying-up point the single shaped members already permanently deformed according to helicoids by imposing to them (between the shaping zone and the laying-up zone) to form with the axis of the tubular body an angle equal to the angle of inclination that in the tubular body the tangent at any point to the longitudinal axis of each shaped member forms with the axis of said tubular body, avoids the arising of stresses in the shaped members that cause deformations preventing the correct configuration of the tubular body itself.

Moreover the fact of guiding the shaped members in the passage between the shaping zone and the laying-up zone contributing to maintain constant the previously reported angle takes care to have the correct formation of the tubular body.

Although particular embodiments of a process and a device for carrying into effect said process have been illustrated and described, it is understood that the invention includes in its scope any possible alternative embodiment accessible to a technician of the field.

## Claims

1. Process for forming a flexible tubular body (12) constituted by a plurality of metallic shaped members (5) placed side by side, permanently deformed according to helicoids, said permanent helicoidal deformation of the shaped members (5) being carried out prior to the step of laying up said shaped members (5) together to originate the tubular body, said process being characterized by the fact that the helicoidal conformation of the shaped members (5) comprises the step of permanently deforming by torsion each shaped member (5) around its longitudinal axis and the subsequent step of permanently deforming by bending each shaped member around the axis of the cross section of the shaped member parallel to the side that will form the inner surface of the tubular body.

2. Process according to claim 1, characterized by the fact that in the step of permanently deforming the shaped member (5), by torsion this member (5), is deformed according to a helix whose pitch is linked to the diameter and to the pitch of the helicoid that the shaped member must have in the tubular body formed by said shaped member by the formula:

$$P_t = \sqrt{\pi^2 d_t^2 + p_c^2}$$

where:

$P_t$ is the pitch of the helix obtained in consequence of the twisting deformation

$d_t$ is the average diameter of the tubular body

$p_c$ is the pitch of the helocoid of the shaped member present in the tubular body.

3. Process according to claim 1, characterized by the fact that in the step of laying up together the shaped members (5) already permanently deformed according to helicoids they are conveyed to the point of mutual laying-up to originate the tubular body (12) so that the angle (α) formed between the axis (a) of each helicoid and the axis (b) of the tubular body is equal to the angle (β) of inclination of the tangent (t) to the longitudinal axis of each helicoid with said axis (b) of the tubular body.

4. Device for forming a flexible tubular body constituted by a plurality of metallic shaped members (5), permanently deformed according to a helocoidal configuration, placed side by side, which comprises:

a plurality of housing bobbins (4) for the shaped members (5) mounted on a rotating cage (3)

a plurality of pre-shaping dies (8), one for each shaped member (5), mounted on a shaft (6) rotating with the cage (3) and downstream of this latter

a fixed laying-up mould (10) coaxial with the rotating shaft (6) and downstream of this latter,

said device being characterized by the fact that each pre-shaping die (8) comprises two pairs (13, 14) of rollers supported by a frame with means for changing their mutual distance, the axes of rotation of the rollers (13', 13'', 14', 14'') being parallel to one another, a mechanism (25, 26, 28') being provided for changing the inclination of the frame both with respect to the axis of rotation of the shaft and with respect to an axis perpendicular to this latter.

5. Device according to claim 4, characterized by the fact that the bond among the pre-shaping dies (8) and the rotating shaft (6) comprises a mechanism (18', 18'', 18''') for changing the radial distance between said shaft (6) and the zone of mutual contact of the downstream pair (13) of rollers (13', 13'') of the pre-shaping die.

6. Device according to claim 4, characterized by the fact that the axes of rotation of the pairs (13, 14) of rollers define two planes convergent towards the rotating shaft (6), being further provided a mechanism (22, 23, 23', 24) for changing the convergency among said planes.

7. Device according to claim 4, characterized by the fact that the revolution surfaces of each pair (13, 14) of rollers of the pre-shaping die (8) are shaped to define between them a cavity (30, 33) having the shape of the shaped member (5) cross section.

8. Device according to claim 7, characterized by the fact that in the pre-shaping die the cavity (33) defined between the rollers of the downstream pair (13) has the same configuration as that it is possessed by the section of the shaped member (5) in the tubular body (12), while the cavity defined between the rollers of the upstream pair (14) has a configuration rotated of 180° with respect to that between the rollers of the downstream pair.

9. Device according to the claims from 4 to 8 characterized by the fact that in the pre-shaping die (8) the rollers of the upstream pair (14) are preferably provided with blocking means (31, 32) for impeding the rotation around their axes.

10. Device according to claims from 4 to 8, characterized by the fact that the rollers of the downstream pair (13) have a radius smaller than the radius of curvature of the permanent bending deformation to be imparted to the shaped members (5) in the tubular body (12).

11. Device according to the claims from 4 to 10, characterized by the fact that the rollers of the downstream pair (13) of the pre-shaping die are motor driven.

12. Device according to claim 4 characterized by the fact that on the rotating shaft (6), downstream of the pre-shaping dies (8), there are mounted guiding elements (9) of the single shaped members (5) to the laying up mould (10).

**Patentansprüche**

1. Verfahren zur Herstellung eines flexiblen rohrförmigen Körpers (12), der durch eine Mehrzahl von metallenen Formkörpern (5) dargestellt ist, die Salte an Seite angeordnet und zu Helikoiden dauerhaft verformt sind, wobei die schraubenförmige dauerhafte Verformung der Formteile (5) ausgeführt wird vor dem Schritt des Aufeinanderlegens der Formteile (5), um den rohrförmigen Körper zu bilden, dadurch gekennzeichnet, daß die schraubenförmige Gestaltung der Formteile (5) den Schritt des dauerhaften Verformens durch Torsion oder Verdrehung jedes Formteiles (5) um seine Längsachse und den nachfolgenden Schritt des dauerhaften Verformens jedes Formteiles durch Bigen um die Achse des Querschnittes des Formteiles parallel zu der Seite umfaßt, welche die Innenfläche des rohrförmigen Körpers bildet.

2. Verfahren nach Anspruch 1, dadurch gekennzeichnet, daß in dem Schritt des dauerhaften Verformens des Formteiles (5) durch Torsion oder Drehung dieser Teil (5) zu einer Schraubenlinie verformt wird, deren Steigung zum Durchmesser und zu der Steigung des Helikoids des Formteiles in Beziehung steht, die der Formteil in dem röhrförmigen Körper haben muß, der durch den Formteil gebildet ist, und zwar nach der Formel

$$P_t = \sqrt{\pi^2 d_t{}^2 + p_c{}^2}$$

worin

$P_t$ die Steigung der Schraubenlinie ist, die als folge der Verdrehungsverformung erhalten ist,

$d_t$ der mittlere Durchmesser des rohrförmigen Körpers und

$p_c$ die Steigung des Helikoids des Formteiles ist, der in dem rohrförmigen Körper vorhanden ist.

3. Verfahren nach Anspruch 1, dadurch gekennzeichnet, daß in dem Schritt des Aufeinanderlegens der Formteile (3), die bereits zu Helikoiden dauerhaft verformt worden sind, diese zu der Stelle des gegenseitigen Auflegens zum Bilden des rohrförmigen Körpers (12) derart gefördert werden, daß der Winkel (α) zwischen der Achse (a) jedes Helikoids und der Achse (b) des rohrförmigen Körpers gleich dem Winkel (β) der Schräglage der Tangente (t) an die Längsachse jedes Helikoids mit der Achse (b) des rohrförmigen Körpers ist.

4. Vorrichtung zum Herstellen eines flexiblen rohrförmigen Körpers, der durch eine Mehrzahl von metallischen Formteilen (5) dargestellt ist, die zu schraubenförmiger Gestalt dauerhaft verformt und Seite an Seite angeordnet sind, umfassend

eine Mehrzahl von Aufnahmespulen (4) für die Formteile (5), die an einem Drehkäfig (3) angebracht sind,

eine Mehrzahl von Vorformungsformen (8), und zwar eine für jeden Formteil (5), die an einer Welle (6), die sich mit dem Käfig (3) dreht, und stromabwärts des letzteren angebracht sind,

eine ortsfeste Auflegeform (10), die gleichachsig mit der Drehwelle (6) und stromabwärts der letzteren angebracht ist.

dadurch gekennzeichnet, daß jede Vorformungsform (8) zwei Paare (13, 14) von Rollen aufweist, die von einem Rahmen mit Mitteln abgestützt sind zum Ändern ihres gegenseitigen Abstandes, die Drehachsen der Rollen (13', 13'', 14', 14'') parallel zueinander verlaufen, und ein Mechanismus (25, 26, 28') vorgesehen ist zum Ändern der Schrägstellung des Rahmens sowohl mit Bezug auf die Drehachse der Welle als auch mit Bezug auf eine Achse rechtwinklig zu der letzteren.

5. Vorrichtung nach Anspruch 4, dadurch gekennzeichnet, daß die Verbindung zwischen den Vorformungsformen (8) und der Drehwelle (6) einen Mechanismus (18', 18'', 18''') aufweist zum Ändern des radialen Abstandes zwischen der Welle (6) und der Zone gegenseitiger Berührung des stromabwärtigen Paares (13) von Rollen (13', 13'') der Vorformungsform.

6. Vorrichtung nach Anspruch 4, dadurch gekennzeichnet, daß die Drehachsen der Paare (13, 14) von Rollen zwei Ebenen definieren, die in Richtung gegen die Drehwelle (6) konvergieren, und weiterhin ein Mechanismus (22, 23, 23', 24) vorgesehen ist zum Ändern der Konvergenz zwischen den Ebenen.

7. Vorrichtung nach Anspruch 4, dadurch gekennzeichnet, daß die Umdrehungslfächen jedes Paares (13, 14) von Rollen der Vorformungsform (8) derart gestellet sind, daß zwischen ihnen ein Hohlraum (30, 33) bestimmt ist, der die Gestalt des Querschnittes des Formteils (5) hat.

8. Vorrichtung nach Anspruch 7, dadurch gekennzeichnet, daß in der Vorformungsform der zwischen den Rollen des stromabwärtigen Paares (13) bestimmte Hohlraum (33) die gleiche Konfiguration hat, wie sie durch den Abschnitt des Formteiles (5) in dem rohrförmigen Körper (12) vorhanden ist, während der zwischen den Rollen des stromaufwärtigen Paares (14) von Rollen gebildete Hohlraum eine Konfiguration hat, die mit Bezug auf die Gestalt des Hohlraumes zwischen den Rollen des stromabwärtigen Paares um 180° gedreht ist.

9. Vorrichtung nach den Ansprüchen 4 bis 8, dadurch gekennzeichnet, daß in der Vorformungsform (8) die Rollen des stromaufwärtigen Paares (14) vorzugsweise mit Blockierungsmitteln (31, 32) versehen sind, um die Drehung um ihre Achsen zu verhindern.

10. Vorrichtung nach den Ansprüchen 4 bis 8, dadurch gekennzeichnet, daß die Rollen des stromabwärtigen Paares (13) einen Radius haben, der kleiner als der Krümmungsradius der dauerhaften Biegeverformung ist, die den Formteilen (5) in dem rohrförmigen Körper (12) erteilt werden soll.

11. Vorrichtung nach den Ansprüchen 4 bis 10, dadurch gekennzeichnet, daß die Rollen des stromabwärtigen Paares (13) der Vorformungsform motorgetrieben sind.

12. Vorrichtung nach Anspruch 4, dadurch gekennzeichnet, daß an der Drehwelle (6) stromabwärts der Vorformungsformen (8) Führungselemente (9) zum Führen der einzelnen Formteile (5) zur Auflegeform (10) angebracht sind.

**Revendications**

1. Procédé de formage d'un corps tubulaire flexible (12) constitué par une pluralité d'éléments profilés métalliques (5) placés côté à côte, déformés de façon permanents selon des hélicoïdes, ladite déformation hélicoïdale permanente des éléments profilés (5) étant effectuée avant l'étape d'assemblage desdits profilés (5) ensemble pour former à l'origine le corps tubulaire, ledit procédé étant caractérisé par le fait que le mise en forme hélicoïdale des éléments profilés (5) comprend l'étape de déformation permanente par torsion de chaque élément profilé (5) autour de son axe longitudinal et l'étape suivante de déformation permanente par flexion de chaque élément profilé autour de l'axe de la section droite de l'élément profilé parallélement au côté qui forme la surface intérieure du corps tubulaire.

2. Procédé suivant la revendication 1, caractérisé par le fait que, dans l'étape de déformation permanente de l'élément profilé (5) par torsion, cet élément (5) est déformé selon une hélice dont le pas est lié au diamètre et au pas de l'hélicoïde, que l'élément profile doit avoir dans le corps tubulaire forms par ledit élément profilé, par le formule:

$$P_t = \sqrt{\pi^2 d_t^2 + p_c^2}$$

où:

P$_t$ désigne le pas de l'hélice obtenue en conséquence de la déformation par torsion,

d$_t$ désigne le diamètre moyen du corpe tubulaire,

p$_c$ désigne le pas de l'hélicoïde de l'élément profilé présent dans la corps tubulaire.

3. Procédé selon la revendication 1, caractérisé par le fait que, dans l'étape d'assemblage des éléments profilés (5) déjà déformés de façon permanente selon des hélicoïdes, ils sont transportés jusqu'au point d'assemblage mutuel pour former à l'origine le corps tubulaire (12) de telle sorte que l'angle (α) formé entre l'axe (a) de chaque hélicoïde et l'axe (b) du corps tubulaire soit égal à l'angle (β) d'inclinaison de la tangente (t) à l'axe longitudinal de chaque helicoïde par rapport audit axe (b) du corps tubulaire.

4. Dispositif de formage d'un corps tubulaire flexible constitué par une pluralité d'éléments profilés métalliques (5), déformés de façon permanente selon une configuration hélicoïdale, placés côté à côte, dispositif qui comprend:

une pluralité de bobines de carter (4) pour les éléments profilés (5) montés sur une cage tournante (3),

une pluralité de matrices de pré-profilage (8), une pour chaque élément profilé (5), montées sur un arbre (6) tournant avec la cage (3) et en aval de cette dernière,

un moule d'assemblage fixe (10) coaxial à l'arbre tournant (6) et placé an aval de ce dernier,

ledit dispositif étant caractérisé par le fait que chaque matrice de pré-profilage (8) comprend deux paires (13, 14) de rouleaux supportés par un châssis avec des moyens pour modifier leur espacement mutuel, les axes de rotation des rouleaux (13', 13'', 14', 14'') étant parallèles entre aux, un mécanisme (23, 26, 28') étant prévu pour changer l'inclinaison du châssis à la fois par rapport à l'axe de rotation de l'arbre et par rapport à l'axe perpendiculaire à ce dernier.

5. Dispositif selon la revendication 4, caractérisé par le fait que la liaison entre les matrices de pré-profilage (8) et l'arbre tournant (6) comprend un mécanisme (18', 18'', 18''') pour changer l'espacement radial entre ledit arbre (6) et lu zone de contact mutuel de la paire d'aval (13) de rouleaux (13', 13'') de la matrice de pré-profilage.

6. Dispositif selon la revendication 4, caractérisé par le fait que les axes de rotation des paires (13, 14) de rouleaux définissent deux plans convergeant en direction de l'arbre tournant (6), et en ce qu'il est en outre prévu un mécanisme (22, 23, 23', 24) pour changer la convergence entre lesdits plans.

7. Dispositif selon la revendication 4, caractérisé par le fait que les surfaces de révolution de chaque paire (13, 14) de rouleaux de la matrice de pré-profilage (8) sont profilées de façon à définir entre eux une cavité (30, 33) ayant la forme de la section droite de l'élément profilé (5).

8. Dispositif selon la revendication 7, caractérisé par le fait que, dans la matrice de pré-profilage, la cavité (33) définie entre les rouleaux de la paire d'aval (13) a la même configuration que celle présentée par la section de l'élément profilé (5) dans le corps tubulaire (12), tandis que la cavité définie entre les rouleaux de la paire d'amont (14) a une configuration tournée de 180° par rapport à celle existant entre les rouleaux de la paire d'aval.

9. Dispositif selon les revendications 4 à 8, caractérisé par le fait que, dans la matrice de pré-profilage (8), les rouleaux de la paire d'amont (14) sont de préférence pourvus de moyens de blocage (31, 32) pour empêcher la rotation autour de leurs axes.

10. Dispositif selon les revendications 4 à 8, caractérisé par le fait que les rouleaux de la paire d'aval (13) ont un rayon plus petit que le rayon de courbure de la déformation permanente causée par flexion dans les éléments profilés (5) du corps tubulaire (12).

11. Dispositif selon les revendications 4 à 10, caractérisé par le fait que les rouleaux de la paire d'aval (13) de la matrice de pré-profilage sont entraînés par moteur.

12. Dispositif selon la revendication 4, caractérisé par le fait que, sur l'arbre tournant (6) et en aval des matrices de pré-profilage (8), des éléments de guidage (9) des éléments profilés individuels (5) sont montés sur le moule d'assemblage (10).

Fig. 1

Fig. 6

Fig. 5

Fig. 2

Fig. 3A

Fig. 3B

Fig. 4